# EUROPÄISCHE PATENTANMELDUNG

(11) **EP 4 471 921 A1**
(43) Veröffentlichungstag der Anmeldung: **04.12.2024**
(21) Anmeldenummer: 24176490.1
(22) Anmeldetag: 17.05.2024
(51) Int. Cl.: H01M 10/04

(54) **BIEGEVERFAHREN UND BIEGEVORRICHTUNG ZUM BIEGEN VON ABLEITERTABS VON BATTERIEZELLEN, INSBESONDERE POUCH-ZELLEN**

(30) Priorität: 31.05.2023 DE 102023114242; 03.08.2023 DE 102023120641
(71) Anmelder: Grob-Werke GmbH & Co. KG, 87719 Mindelheim (DE)
(72) Erfinder: Riedler, Christoph, 86470 Thannhausen (DE); Hierl, Patrick, 87742 Altensteig (DE)
(74) Vertreter: KASTEL Patentanwälte PartG mbB

(57) **Zusammenfassung**

Um flexibel und mit einfacheren Mitteln ein optimales Biegen von Ableitertabs von Batteriezellen (14.1-14.4), die an unterschiedlichen Positionen zu einem Batteriemodul oder einem Batteriepack zusammengefügt werden sollen, zu ermöglichen, schafft die Erfindung ein Biegeverfahren zum Biegen der Ableitertabs (12.1a-12.4a; 12.1b-12.4b), umfassend:
a) Bereitstellen einer ersten Batteriezelle (14.1) mit einem ersten Ableitertab (12.1a; 12.1b) und einer zweiten Batteriezelle (14.2) mit einem zweiten Ableitertab (12.2a; 12.2b), und
b) unterschiedliches Umbiegen des ersten Ableitertabs (12.1a; 12.1b) und des zweiten Ableitertabs (12.2a; 23.2b);
wobei Schritt b) die Schritte umfasst:
b1) Bereitstellen einer ersten und zweiten Halteeinrichtung (32, 34) zum Halten eines ersten bzw. zweiten Endbereichs (22.3, 22.2) des zu biegenden Ableitertabs (12.1a, 12.2a; 12.1b, 12.2b), wobei die Halteeinrichtungen mittels einer computergesteuerten Relativbewegungseinrichtung (36) relativ bewegbar sind,
b2) Halten des ersten Ableitertabs (12.1a; 12.1b) mit den Halteeinrichtungen (32, 34) und Ansteuern der Relativbewegungseinrichtung (36), um den ersten Ableitertab (12.1a; 12.1b) in eine erste gebogene Form zu biegen; und
b3) Halten des zweiten Ableitertabs (12.2a; 12.2b) mit den Halteeinrichtungen (32, 34) und Ansteuern der Relativbewegungseinrichtung (36) unterschiedlich zu Schritt b2), um den zweiten Ableitertab (12.2a; 12.2b) in eine zu der ersten gebogenen Form unterschiedliche zweite gebogene Form zu biegen.

## Beschreibung

Die Erfindung betrifft ein im Zuge der Herstellung eines Batteriemoduls oder eines Batteriepacks aus Batteriezellen, wie z.B. Pouch-Zellen oder Festkörper-Batteriezellen, durchzuführendes Biegeverfahren zum Biegen von Ableitertabs von Batteriezellen. Weiter betrifft die Erfindung ein Herstellverfahren zum Herstellen eines Batteriemoduls oder Batteriepacks aus Batteriezellen, wie z.B. Pouch-Zellen oder Festkörper-Batteriezellen, unter Durchführung eines solchen Biegeverfahrens. Weiter betrifft die Erfindung eine Biegevorrichtung zum Biegen von Ableitertabs von Batteriezellen im Zuge der Herstellung eines Batteriemoduls oder Batteriepacks aus Batteriezellen, wie insbesondere Pouch-Zellen oder Festkörper-Batteriezellen, sowie eine Verwendung einer solchen Biegevorrichtung. Schließlich betrifft die Erfindung eine Steuerung sowie ein Computerprogramm für eine solche Biegevorrichtung.

Die Erfindung liegt auf dem Gebiet der Herstellung von Batterien und deren Vorprodukten, insbesondere auf dem Gebiet der Elektromobilität. Insbesondere betrifft die Erfindung Verfahren und Vorrichtungen, die bei der Herstellung von Batteriemodulen aus Batteriezellen, wie insbesondere Pouch-Zellen oder Festkörper-Batteriezellen, Verwendung finden.

Pouch-Zellen sind neben der prismatischen Zelle und der Rundzelle ein häufig verwendeter Zelltyp im Bereich der E-Mobilität. Pouch-Zellen, auch Coffee-Bag genannt, haben mehrere aufeinander geschichtete Lagen von Kathoden und Anoden, die von einer Folie umgeben sind. Eine Pouch-Zelle hat stets zwei Ableitertabs (Plus- und Minuspol; diese können auch unterschiedlich gebogen sein).

Um die einzelnen Pouch-Zellen elektrisch zu verbinden, werden die Ableitertabs der einzelnen Pouch-Zellen miteinander kontaktiert. Durch diese Methode können aus den Zellen Module für ein Batteriepack gebildet werden. Es gibt den Trend, statt eines Batteriemoduls als "Zwischenprodukt" Pouch-Zellen direkt zu einem Batteriepack zu verbinden. Neben Pouch-Zellen können auch andere Batteriezellen, wie z.B. zukünftige Festkörper-Batteriezellen, Ableitertabs aufweisen, die auf vergleichbare Art miteinander zu verbinden sind.

Damit sich die Ableitertabs von mehreren Zellen kontaktieren lassen, müssen diese entsprechend umgeformt werden. Die bisher bekannten Vorrichtungen basieren auf dem Prinzip des Gesenkbiegens. Hierbei drückt ein Stempel den Ableitertab in eine Matrize und formt so die gewünschte Form. Das Gesenkbiegen ermöglicht eine schnelle und genaue Umformung des Ableitertab. Dem steht jedoch gegenüber, dass mit einer Vorrichtung nur eine spezifische Form hergestellt werden kann. Um eine andere Form des Ableitertab zu erzeugen, muss der Werkzeugsatz (Stempel und Matrize) ausgetauscht werden.

Die Erfindung hat sich zur Aufgabe gestellt, ein Biegen von Ableitertabs unterschiedlicher Batteriezellen zum Verbinden der Batteriezellen zu einem Batteriemodul oder einem Batteriepack in industrieller Großserienfertigung flexibler, insbesondere mit geringerem Aufwand, zu ermöglichen.

Zum Lösen dieser Aufgabe schafft die Erfindung ein Biegeverfahren gemäß Anspruch 1. Ein Herstellverfahren für Batteriemodule oder Batteriepacks unter Einsatz eines solchen Biegeverfahrens, eine Biegevorrichtung, die zum Durchführen des Biegeverfahrens geeignet ist, eine Verwendung derselben zum Biegen von Ableitertabs unterschiedlicher Pouch-Zellen sowie eine elektronische Steuerung und ein Computerprogramm für eine solche Biegevorrichtung sind Gegenstand der weiteren unabhängigen Ansprüche.

Vorteilhafte Ausgestaltungen sind Gegenstand der Unteransprüche.

Die Erfindung schafft gemäß einem ersten Aspekt davon ein im Zuge der Herstellung eines Batteriemoduls oder eines Batteriepacks aus Batteriezellen, wie insbesondere Pouch-Zellen oder Festkörper-Batteriezellen, durchzuführendes Biegeverfahren zum Biegen von Ableitertabs von Batteriezellen, umfassend:
a) Bereitstellen einer ersten Batteriezelle mit einem ersten Ableitertab und einer zweiten Batteriezelle mit einem zweiten Ableitertab, und
b) Umbiegen des ersten Ableitertabs und des zweiten Ableitertabs, so dass der erste und der zweite Ableitertab unterschiedlich gebogen sind;
wobei Schritt b) die Schritte umfasst:
b1) Bereitstellen einer Biegevorrichtung, die eine erste Halteeinrichtung zum Halten eines ersten Endbereichs des zu biegenden Ableitertabs, eine zweite Halteeinrichtung zum Halten eines zweiten Endbereichs des zu biegenden Ableitertabs und eine computergesteuerte Relativbewegungseinrichtung zum relativen Bewegen der ersten und der zweiten Halteeinrichtung in wenigstens zwei Bewegungsrichtungen aufweist,
b2) Halten des ersten Ableitertabs mit der ersten und der zweiten Halteeinrichtung und Ansteuern der Relativbewegungseinrichtung, um den ersten Ableitertabs in eine erste gebogene Form zu biegen;
b3) Halten des zweiten Ableitertabs mit der ersten und der zweiten Halteeinrichtung und Ansteuern der Relativbewegungseinrichtung unterschiedlich zu Schritt b2), um den zweiten Ableitertab in eine zu der ersten gebogenen Form unterschiedliche zweite gebogene Form zu biegen.

Demnach wird ein Ableitertab der ersten Batteriezelle (z.B. erste Pouch-Zelle) als erster Ableitertab bezeichnet. Dies kann der Pluspol-Ableitertab oder/und der Minuspol-Ableitertab der ersten Batteriezelle sein. In einigen Ausführungsformen werden beide erste Ableitertabs der ersten Batteriezelle, eventuell auch unterschiedlich, gebogen. Ein Ableitertab der zweiten Batteriezelle (z.B. zweite Pouch-Zelle) wird als zweiter Ableitertab bezeichnet. Dies kann der Pluspol-Ableitertab oder der Minuspol-Ableitertab der zweiten Batteriezelle sein. In einigen Ausführungsformen werden beide zweite Ableitertabs der zweiten Batteriezelle, eventuell auch unterschiedlich, gebogen.

Es ist bevorzugt, dass Schritt b1) umfasst:
Bereitstellen der Relativbewegungseinrichtung mit einer Längsbewegungseinheit zum relativen vorzugsweise linearen Bewegen der ersten und der zweiten Halteeinrichtung mit wenigstens einer Richtungskomponente in Längsrichtung zu dem zu verbiegenden Ableitertab.

Es ist bevorzugt, dass Schritt b1) umfasst:
Bereitstellen der Relativbewegungseinrichtung mit einer Querbewegungseinheit zum relativen vorzugsweise linearen Bewegen der ersten und der zweiten Halteeinrichtung mit wenigstens einer Richtungskomponente quer zu dem zu verbiegenden Ableitertab.

Es ist bevorzugt, dass Schritt b1) umfasst:
Bereitstellen der Relativbewegungseinrichtung mit einer Drehbewegungseinheit zum relativen Verdrehen der ersten und der zweiten Halteeinrichtung.

Es ist bevorzugt, dass Schritt b1) umfasst: Bereitstellen der ersten Halteeinrichtung mit einer ersten Klemmeinheit, die einen ersten Niederhalter aufweist, mit einer zweiten Klemmeinheit, die einen zweiten Niederhalter aufweist, und mit wenigstens einem an wenigstens einer der Klemmeinheiten verfahrbar zu dieser angeordnetem Andrücker,
und dass der erste Endbereich durch relatives aufeinander zu Bewegen des ersten und zweiten Niederhalters gehalten wird und der Ableitertab durch den wenigstens einen Andrücker in eine definierte Position gebracht wird.

Es ist bevorzugt, dass Schritt b1) umfasst: Bereitstellen der zweiten Halteeinrichtung mit einem Parallelgreifer, der mittels der Relativbewegungseinrichtung zum Verbiegen des Ableitertabs bewegbar ist.

Es ist bevorzugt, dass Schritt b) umfasst:
b.i) Regeln, Steuern und/oder Überwachen der Kräfte an der Relativbewegungseinrichtung beim Durchführen von Schritt b2) und/oder b3), um Beschädigungen des Ableitertabs beim Biegen zu vermeiden und/oder fehlerhaft gebogene Ableitertabs zu erkennen.

Es ist bevorzugt, dass Schritt b) umfasst:
b.ii) Ansteuern der Relativbewegungseinrichtung derart, dass eine Rückverformung des Ableitertabs aufgrund eines elastischen Materialverhaltens kompensiert wird.

Es ist bevorzugt, dass Schritt b) umfasst:
b.iii) Biegen von Ableitertabs mit unterschiedlichen Dicken und/oder Materialien mit der Biegevorrichtung ohne Werkzeugwechsel.

Es ist bevorzugt, dass Schritt b) umfasst:
b.iv) Bewegen der gesamten Biegevorrichtung zum Anpassen an die jeweilige Position der zu verarbeitenden Batteriezelle und/oder zum Verfahren der Biegevorrichtung in eine Ruhe- und/oder Wartungsposition.

Es ist bevorzugt, dass Schritt b) umfasst:
b.v) vorzugsweise seitliches Einfahren der ersten Batteriezelle in die Biegevorrichtung, Spannen des ersten Endbereichs des ersten Ableitertabs mit der ersten Halteeinrichtung, Positionieren des ersten Ableitertabs mittels eines Positionierelements, Spannen des zweiten Endbereichs des ersten Ableitertabs mit der zweiten Halteeinrichtung, Biegen des ersten Ableitertabs durch Bewegen der zweiten Halteeinrichtung gemäß einem ersten Bewegungsmuster, Öffnen der ersten und zweiten Halteeinrichtung und Weitertakten der ersten Batteriezelle.

Es ist bevorzugt, dass Schritt b) umfasst:
b.vi) vorzugsweise seitliches Einfahren der zweiten Batteriezelle in die Biegevorrichtung, Spannen des ersten Endbereichs des zweiten Ableitertabs mit der ersten Halteeinrichtung, Positionieren des zweiten Ableitertabs mittels eines Positionierelements, Spannen des zweiten Endbereichs des zweiten Ableitertabs mit der zweiten Halteeinrichtung, Biegen des zweiten Ableitertabs durch Bewegen der zweiten Halteeinrichtung gemäß einem zweiten Bewegungsmuster, Öffnen der ersten und zweiten Halteeinrichtung und Weitertakten der zweiten Batteriezelle.

Gemäß einem weiteren Aspekt schafft die Erfindung ein Herstellverfahren zum Herstellen eines Batteriemoduls oder Batteriepacks aus Batteriezellen, wie z.B. Pouch-Zellen oder anderen Batteriezellen mit Ableitertabs, umfassend:
Durchführen des Biegeverfahrens nach einer der voranstehenden Ausgestaltungen und
c) elektrisches Kontaktieren des ersten und des zweiten Ableitertabs, um das Batteriemodul zu bilden.

Gemäß einem weiteren Aspekt schafft die Erfindung eine Biegevorrichtung zum Biegen von Ableitertabs von Batteriezellen, wie z.B. Pouch-Zellen, im Zuge der Herstellung eines Batteriemoduls oder Batteriepacks aus mit Ableitertabs versehenen Batteriezellen, wie z.B. Pouch-Zellen, umfassend eine erste Halteeinrichtung zum Halten eines ersten Endbereichs des zu biegenden Ableitertabs, eine zweite Halteeinrichtung zum Halten eines zweiten Endbereichs des zu biegenden Ableitertabs und eine computergesteuerte Relativbewegungseinrichtung zum relativen Bewegen der ersten und der zweiten Halteeinrichtung in wenigstens zwei Bewegungsrichtungen sowie eine (elektronische, insbesondere computerimplementierte) Steuerung, die dazu ausgebildet ist, die Relativbewegungseinrichtung gemäß einem ersten Bewegungsmuster zum Verbiegen eines ersten Ableitertabs in eine erste gebogene Form und gemäß einem zweiten Bewegungsmuster zum Verbiegen eines zweiten Ableitertabs in eine zweite gebogene Form anzusteuern.

Es ist bevorzugt, dass die Steuerung dazu eingerichtet ist, die Biegevorrichtung zum Durchführen des Biegeverfahrens nach einer der voranstehenden Ausgestaltungen anzusteuern.

Es ist bevorzugt, dass die Relativbewegungseinrichtung eine Längsbewegungseinheit zum relativen, vorzugsweise linearen, Bewegen der ersten und der zweiten Halteeinrichtung mit wenigstens einer Richtungskomponente in Längsrichtung zu dem zu biegenden Ableitertab aufweist.

Es ist bevorzugt, dass die Relativbewegungseinrichtung eine Querbewegungseinheit zum relativen, vorzugsweise linearen, Bewegen der ersten und der zweiten Halteeinrichtung mit wenigstens einer Richtungskomponente quer zu dem zu biegenden Ableitertab aufweist.

Es ist bevorzugt, dass die Relativbewegungseinrichtung eine Drehbewegungseinheit zum relativen Verdrehen der ersten und der zweiten Halteeinrichtung aufweist.

Es ist bevorzugt, dass die jeweiligen Einheiten der Relativbewegungseinrichtung jeweils eine Linearachse aufweisen, die einen Linearbewegungsmechanismus und einen Servoantrieb aufweist.

Es ist bevorzugt, dass die Halteeinrichtungen und die Relativbewegungseinrichtung auf einer linear beweglichen Basis angeordnet sind, die zwischen einer Warte- oder Wartungsposition und einer Biegeposition zum Durchführen des Biegens bewegbar ist.

Es ist bevorzugt, dass die erste Halteeinrichtung eine erste Klemmeinheit mit einem ersten Niederhalter, eine zweite Klemmeinheit mit einem zweiten Niederhalter und wenigstens einen an wenigstens einer der Klemmeinheiten verfahrbar zu dieser angeordnetem Andrücker aufweist.

Es ist bevorzugt, dass eine Biegeeinheit vorgesehen ist, die einen mittels der Relativbewegungseinrichtung verfahrbaren Greifer als zweite Halteeinrichtung aufweist.

Gemäß einem weiteren Aspekt schafft die Erfindung eine Verwendung einer Biegevorrichtung nach einer der voranstehenden Ausgestaltungen zum unterschiedlichen Biegen von Ableitertabs mehrerer Batteriezellen (wie z.B. Pouch-Zellen), um diese beim Herstellen eines Zell-Moduls oder Zell-Packs miteinander zu verbinden.

Gemäß einem weiteren Aspekt schafft die Erfindung eine (elektronische, insbesondere computerimplementierte) Steuerung für eine Biegevorrichtung nach einer der voranstehenden Ausgestaltungen, wobei die Steuerung dazu eingerichtet ist, die Biegevorrichtung zum Durchführen des Biegeverfahrens nach einem der oben angegebenen Ausführungen derart anzusteuern, dass Ableitertabs von Batteriezellen, die zu einem Zell-Modul oder Zell-Pack zusammengesetzt werden sollen, unterschiedlich gebogen werden.

Gemäß einem weiteren Aspekt schafft die Erfindung ein Computerprogramm, umfassend Anweisungen, die eine Biegevorrichtung nach einer der voranstehenden Ausgestaltungen dazu veranlassen, das Biegeverfahren nach einer der oben angegebenen Ausführungen durchzuführen.

Für die Fertigung von Batteriemodulen aus mit Ableitertabs versehenen Batteriezellen, wie insbesondere Pouch-Zellen, sind bisher verschiedene Biegeformen des Ableitertab für die Kontaktierung notwendig. Dies führt dazu, dass für jede Biegeform eine eigene Gesenkbiegevorrichtung benötigt wird. Aufgrund der Entwicklung hin zu größeren Modulen wird für neue Batteriezellen wie z.B. Pouch-Zellen eine größere Anzahl an verschiedenen Biegeformen für die Kontaktierung benötigt. Dies führt zu einem hohen Aufwand aufgrund der Vielzahl an benötigten Biegevorrichtungen, die einerseits Kosten verursachen und andererseits den Flächenbedarf einer solchen Biegeanlage erhöhen. Darüber hinaus ist der Werkzeugwechsel an einer Biegevorrichtung aufgrund der nachfolgend notwendigen erneuten Einstellung der Vorrichtung zeitintensiv. Es ist daher erwünscht, die Biegevorrichtungen für verschiedene Biegeformen zu flexibilisieren.

Ausführungsformen der Erfindung sehen ein Ableitertab-Servobiegen vor.

Um die Biegevorrichtungen für verschiedene Biegeformen zu flexibilisieren und einen Werkzeugwechsel damit zu vermeiden, ist in einigen Ausführungsformen eine Biegevorrichtung mit mehreren verfahrbaren Achsen vorgesehen. Diese Achsen ermöglichen sowohl eine lineare als auch eine rotatorische Bewegung des Biegewerkzeuges und bieten somit eine Vielzahl an verschiedenen Biegeformen, die realisiert werden können.

Im Unterschied zum Stand der Technik ermöglicht das Ableitertab-Servobiegen die Herstellung verschiedener Biegeformen mit einer Biegevorrichtung, ohne einen Werkzeugwechsel durchführen zu müssen.

Bei einigen Ausführungsformen bieten darüber hinaus die dort eingesetzten Linearachsen eine Überwachung der während des Umformprozesses auftretenden Kräfte. Infolgedessen können Beschädigungen des Ableitertabs vermieden oder beschädigte Zellen aufgrund einer Erkennung im weiteren Verlauf entfernt werden. Das Ableitertab-Servobiegen kann die Rückverformung des Ableitertabs aufgrund von elastischem Materialverhalten kompensieren.

Im Vergleich zum Stand der Technik kann die bei einigen Ausführungsformen die Biegevorrichtung die Rückverformung flexibel kompensieren. Daher können von einer Biegevorrichtung Ableitertabs verschiedener Dicke und Material umgeformt werden, ohne einen Werkzeugwechsel durchführen zu müssen.

Bei einigen Ausführungsformen ist des Weiteren die gesamte Biegevorrichtung auf einer weiteren linearen Achse (z.B. Teleskopauszug) montiert, die es ermöglicht die Biegevorrichtung an die genaue Position der Batteriezelle anzupassen.

Bei einigen Ausführungsformen kann darüber hinaus die Biegevorrichtung über diese zusätzliche Achse aus der Station in eine leicht zugängliche Wartungsposition verfahren werden.

Ausführungsbeispiele werden im Folgenden anhand der beigefügten Zeichnungen näher erläutert. Darin zeigt:
- Fig. 1: eine schematische perspektivische Ansicht mehrerer Batteriezellen, hier in Form von Pouch-Zellen, gemäß einer ersten Ausführungsform, die zu einem Batteriemodul oder einem Batteriepack zusammengeführt werden sollen,
- Fig. 2: eine erste und eine zweite Pouch-Zelle gemäß einer zweiten Ausführungsform, die zu einem Batteriemodul oder einem Batteriepack zusammengeführt werden sollen;
- Fig. 3a: eine Seitenansicht eines Ableitertabs einer der Pouch-Zellen in einem Ausgangszustand (ungebogen);
- Fig. 3b: eine Seitenansicht des Ableitertabs, der in eine V-Form gebogen worden ist;
- Fig. 3c: eine Seitenansicht des Ableitertabs, der in eine Z-Form gebogen worden ist;
- Fig. 4: eine Seitenansicht einer Biegevorrichtung zum unterschiedlichen Biegen von Ableitertabs der Pouch-Zellen von Fig. 1 oder 2;
- Fig. 5: eine gegenüber Fig. 4 vergrößerte Seitenansicht einer Klemmeinheit der Biegevorrichtung von Fig. 4;
- Fig. 6: eine gegenüber Fig. 4 vergrößerte Seitenansicht einer Biegeeinheit der Biegevorrichtung von Fig. 4; und
- Fig. 7: eine Draufsicht auf die Biegeeinheit von Fig. 6.

Im Folgenden werden Ausführungsformen eines Biegeverfahrens und einer Biegevorrichtung 30 zum Biegen von Ableitertabs 12.1a-12.4a, 12.1b-12.4b von Pouch-Zellen 14.1-14.4 im Zuge der Herstellung eines Batteriemoduls oder eines Batteriepacks aus Pouch-Zellen 14.1-14.4 anhand der beigefügten Figuren erläutert. Wenngleich das Biegeverfahren und die Biegevorrichtung anhand der der zeit bevorzugten Verwendung des Biegens von Ableitertabs von Pouch-Zellen beschrieben wird, sind sie auch zum Biegen von Ableitertabs anderer Batteriezelltypen geeignet. Z.B. können auch Festkörper-Batteriezellen mit vergleichbaren Ableitertabs versehen sein, die analog zu den Ableitertabs der Pouch-Zellen gebogen werden sollen, um die Batteriezellen zu Modulen oder Packs zusammenzufügen.

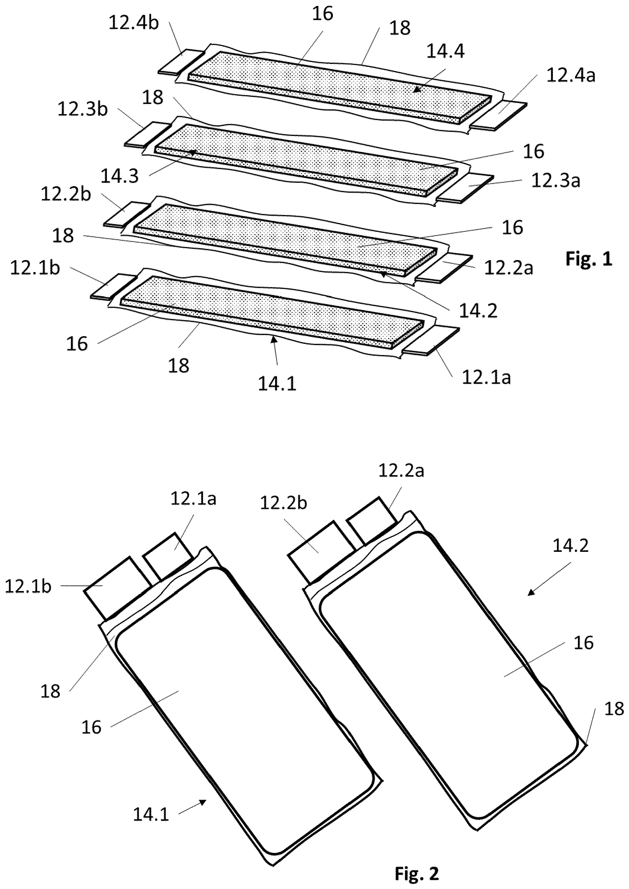

Die Fig. 1 und 2 zeigen unterschiedliche Ausführungsformen von Pouch-Zellen 14.1-14.4. Jede der Pouch-Zellen 14.1-14.4 weist eine Elektrodenanordnung 16 aus aufeinandergestapelten Anoden und Kathoden in einer Folienumhüllung 18 sowie einen Pluspol-Ableitertab 12.1a-12.4a und einen Minuspol-Ableitertab 12.1b-12.4b auf.

In Fig. 1 sind beispielsweise eine erste bis vierte Pouch-Zelle 14.1-14.4 dargestellt, bei der die Ableitertabs 12.1a-12.4a für den Pluspol und die Ableitertabs 12.1b-12.4b für den Minuspol auf gegenüberliegenden Seiten aus der Folienumhüllung 18 hervorstehen. Die erste Pouch-Zelle 14.1 weist einen ersten Ableitertab 12.1a für den Pluspol und einen ersten Ableitertab 12.1b für den Minuspol auf. Die zweite Pouch-Zelle 14.2 weist einen zweiten Ableitertab 12.2a für den Pluspol und einen zweiten Ableitertab 12.2b für den Minuspol auf. Die dritte Pouch-Zelle 14.3 weist einen dritten Ableitertab 12.3a für den Pluspol und einen dritten Ableitertab 12.3b für den Minuspol auf. Und die vierte Pouch-Zelle 14.4 weist einen vierten Ableitertab 12.4a für den Pluspol und einen vierten Ableitertab 12.4b für den Minuspol auf. Zum Bilden des Batteriemoduls oder des Batteriepacks werden die ersten bis vierten Ableitertabs 12.1a-12.4a für den Pluspol miteinander verbunden, und die ersten bis vierten Ableitertabs 12.1b-12.4b für den Minuspol werden ebenfalls miteinander verbunden.

In Fig. 2 sind nur die erste und die zweite Pouch-Zelle 14.1, 14.2 in einer anderen Ausführung gezeigt. Wie daraus ersichtlich, können die Ableitertabs 12.1a, 12.1b, 12.2a, 12.2b anders an der Pouch-Zelle 14.1, 14.2 angeordnet sein, z.B. können sie auf der gleichen Seite aus der Folienumhüllung 18 vorstehen.

Die im Folgenden näher erläuternden Biegeverfahren sind jeweils auf die unterschiedlichen Ausführungsformen von Pouch-Zellen 14.1-14.4 anwendbar.

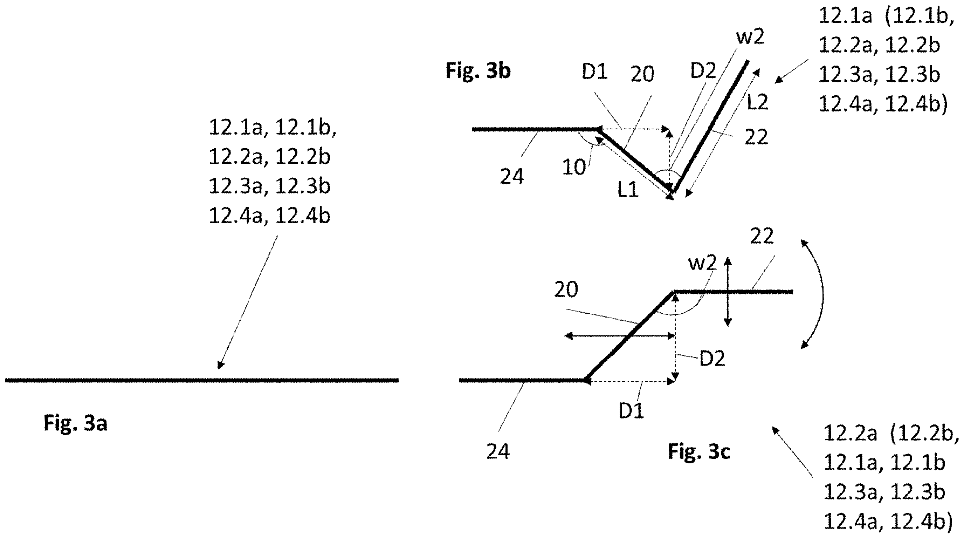

Es wird nun auf Fig. 3a bis 3c Bezug genommen. Je nach Lage, die die jeweilige Pouch-Zelle 14.1-14.4 in dem Batteriemodul oder dem Batteriepack einnehmen soll, sollen die Ableitertabs 12.1a-12.4a, 12.1b-12.4b passend gebogen werden. Hierzu sollen die Ableitertabs 12.1a-12.4a, 12.1b-12.4b von Pouch-Zellen 14.1 - 14.4, die an unterschiedlichen Positionen in dem Batteriepack oder dem Batteriemodul anzuordnen sind, auch unterschiedlich gebogen werden. Beispielsweise wird der an der ersten Pouch-Zelle 14.1 vorhandene erste Pluspol-Ableitertab 12.1a in eine andere Form gebogen als der an der zweiten Pouch-Zelle 14.2 vorhandene zweite Pluspol-Ableitertab 12.2a. Auch kann erwünscht sein, den Pluspol-Ableitertab 12.1a-12.4a und den Minuspol-Ableitertab 12.1b-12.4b derselben Pouch-Zelle 14.1-14.2 unterschiedlich zu biegen.

Fig. 3a zeigt eine Seitenansicht des Ausgangszustand der am Anfang ungebogenen Ableitertabs 12.1a-12.4a, 12.1b-12.4b.

Beispielsweise ist je nach Design des Batteriemoduls oder des Batteriepacks zumindest für einige der Ableitertabs 12.1a-12.4a, 12.1b-12.4b eine V-Form erwünscht, wie sie in Fig. 3b gezeigt ist, wobei der jeweilige Ableitertab 12.1a-12.4a, 12.1b-12.4b in zwei zueinander gewinkelte Schenkel 20, 22 gebogen wird. Die Länge L1 und L2 der jeweiligen Schenkel 20, 22, der Abstand D1, D2 der Biegekanten in Längsrichtung zum Tab (X-Richtung), der Winkel w1 zwischen dem ersten Schenkel 20 und einer Basis 24 des Ableitertabs 12.1a.12.4a, 12.1b-12.4b sowie der Winkel w2 zwischen den Schenkeln 20, 22 kann für die Ableitertabs 12.1a-12.4a, 12.1b-12.4b der unterschiedlichen Pouch-Zellen 14.1-14.4 unterschiedlich sein.

Die V-Form lässt sich insbesondere durch die Dimensionen D1, D2 und w2 definieren, wobei D1 der Abstand zwischen Biegekanten der Form längs zur Basis (in X-Richtung) ist, D2 der Abstand der zwischen den Schenkeln gebildeten Biegekante von der Basis in Richtung quer zur Erstreckung der Basis (Y-Richtung) und w2 der Winkel an der Biegekante zwischen den Schenkeln ist.

Bei anderen Ausführungsformen kann der jeweilige Ableitertab 12.1a-12.4a, 12-1b-12.4b zumindest einiger der Pouch-Zellen 14.1-14.4 in eine Z-Form gebogen werden, wie sie in Fig. 3c dargestellt ist. Beispielsweise ist bei der Z-Form eine Kröpfung vorgesehen, wobei ein erster Schenkel 20 von einer Basis 24 schräg verläuft und sich mit einer Dimension D1 in Richtung der Erstreckung der Basis 24 weg (z.B. X-Richtung) von der Basis 24 erstreckt und ein zweiter Schenkel 22 mit einer Dimension D2 in einer Richtung quer zur Erstreckung der Basis 24 (z.B. Y-Richtung) von der Basis 24 versetzt ist und mit einem Winkel w2 zu dem ersten Schenkel 20 geneigt ist. Auch hier können die Werte der Dimensionen D1, D2, die jeweiligen Längen der Schenkel 20, 22 und die Winkel w1, w2 bei den unterschiedlichen Ableitertabs 12.1a-12.4a, 12.1b-12.4b unterschiedlich sein.

Auch die Z-Form lässt sich insbesondere durch die Dimensionen D1, D2 und w2 definieren, wobei D1 der Abstand zwischen Biegekanten der Form längs zur Basis (in X-Richtung) ist, D2 der Abstand der zwischen den Schenkeln gebildeten Biegekante von der Basis in Richtung quer zur Erstreckung der Basis (Y-Richtung) und w2 der Winkel an der Biegekante zwischen den Schenkeln ist.

Auch können einige der Ableitertabs 12.1a-12.4a V-förmig und andere Z-förmig gebogen sein.

Während im Stand der Technik für jede dieser individuellen unterschiedlichen Formen eine eigene Biegeform für ein Gesenkbiegen des jeweiligen Ableitertabs 12.1a-12.4a, 12.1b-12.4b vorgesehen werden musste, erfolgt das Biegen der Ableitertabs 12.1a-12.4a, 12.1b-12.4b gemäß dem hier dargestellten Biegeverfahren zwischen einer ersten und zweiten Halteeinrichtung, die numerisch gesteuert zueinander bewegt werden, um die unterschiedlichen Biegeformen zu erhalten. Als Eingangsgrößen können hierzu insbesondere die Größen D1, D2 und w2 der jeweiligen Form dienen.

Es wird somit ein im Zuge der Herstellung eines Batteriemoduls oder eines Batteriepacks aus Batteriezellen, wie z.B. Pouch-Zellen, durchzuführendes Biegeverfahren zum Biegen von Ableitertabs von Batteriezellen, wie insbesondere Pouch-Zellen, mit den folgenden Schritten vorgeschlagen:
a) Bereitstellen einer ersten Batteriezelle (insbesondere einer ersten Pouch-Zelle 14.1) mit einem ersten Ableitertab 12.1a, 12.1b und einer zweiten Batteriezelle (insbesondere einer zweiten Pouch-Zelle 14.2) mit einem zweiten Ableitertab 12.2a, 12.2b, und
b) Umbiegen des ersten Ableitertabs 12.1a, 12.1b und des zweiten Ableitertabs 12.2a, 12.2b, so dass der erste Ableitertab 12.1a, 12.1b und der zweite Ableitertab 12.2a, 12.2b unterschiedlich gebogen sind.

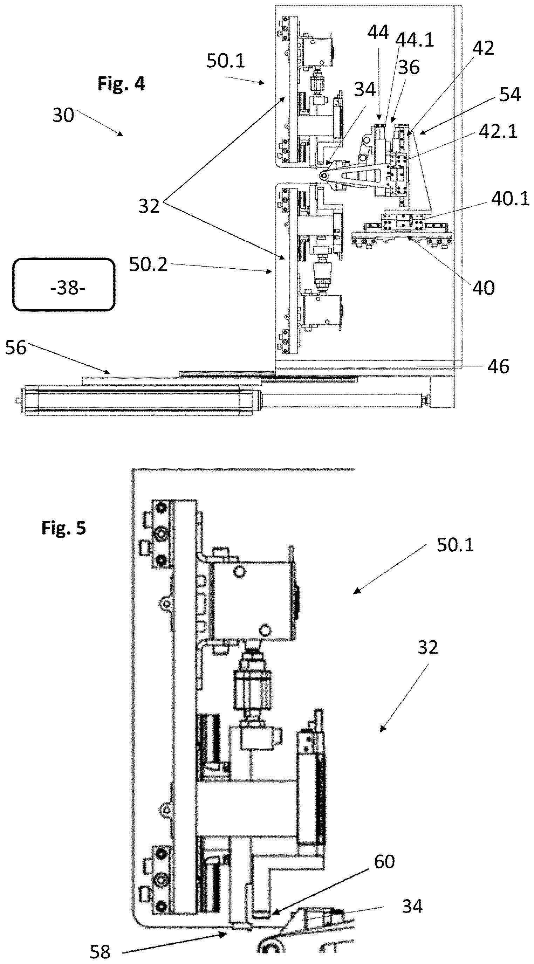

Zum Durchführen der unterschiedlichen Biegungen gemäß Schritt b) wird eine Biegevorrichtung 30 bereitgestellt, wie sie im Folgenden näher anhand der Darstellungen in den Fig. 4 bis 7 erläutert wird.

Die Biegevorrichtung 30 weist eine erste Halteeinrichtung 32 zum Halten eines ersten Endbereichs - beispielsweise der Basis 24 - des zu biegenden Ableitertabs 12.1a-12.4a, 12.1b-12.4b, eine zweite Halteeinrichtung 34 zum Halten eines zweiten Endbereichs - beispielsweise des freien zweiten Schenkels 22 - des zu biegenden Ableitertabs 12.1a-12.4a, 12.1b-12.4b und eine computergesteuerte Relativbewegungseinrichtung 36 zum relativen Bewegen der ersten und der zweiten Halteeinrichtung 32, 34 in wenigstens zwei Bewegungsrichtungen auf.

Zum Biegen des ersten Ableitertabs 12.1a, 12.1b wird dieser mit der ersten und der zweiten Halteeinrichtung 32, 34 gehalten, und die Relativbewegungseinrichtung 36 wird gemäß einem vordefinierten ersten Bewegungsmuster angesteuert, um den ersten Ableitertab 12.1a, 12.1b in eine erste gebogene Form zu biegen.

Ebenso wird - beispielsweise nach Fertigstellung der Biegungen für die erste Pouch-Zelle 14.1 - der zweite Ableitertab 12.2a, 12.2b der zweiten Pouch-Zelle 14.2 mit der ersten und der zweiten Halteeinrichtung 32, 34 gehalten, und die Relativbewegungseinrichtung 36 wird unterschiedlich zu dem Biegen des ersten Ableitertabs 12.1a, 12.1b angesteuert - insbesondere gemäß einem zweiten vordefinierten Bewegungsmuster -, um den zweiten Ableitertab 12.2a, 12.2b in eine zu der ersten gebogenen Form unterschiedliche zweite gebogene Form zu biegen.

Ein derartiges Biegen wird anschließend - wiederum mit unterschiedlichen Ansteuerungen der Relativbewegungseinrichtung 36 - bei dritten, vierten und jedem weiteren Ableitertab 12.3a, 12.3b, 12.4a, 12.4b durchgeführt.

Beispiele für die unterschiedlichen Formen sind in den Fig. 3b und 3c wiedergegeben, wobei die Dimensionen D1, D2, w2 jeweils bei unterschiedlichen Formen unterschiedlich sein können.

Die Biegevorrichtung 30 weist eine Steuerung 38 auf, die dazu ausgebildet ist, die Relativbewegungseinrichtung 36 gemäß dem ersten Bewegungsmuster zum Verbiegen des ersten Ableitertabs 12.1a, 12.1b in die erste gebogene Form und gemäß dem zweiten Bewegungsmuster zum Verbiegen des zweiten Ableitertabs 12.2a, 12.2b in die zweite gebogene Form sowie zum Ansteuern gemäß den weiteren Bewegungsmuster zum Biegen der weiteren Ableitertabs in die jeweils gewünschte Form anzusteuern.

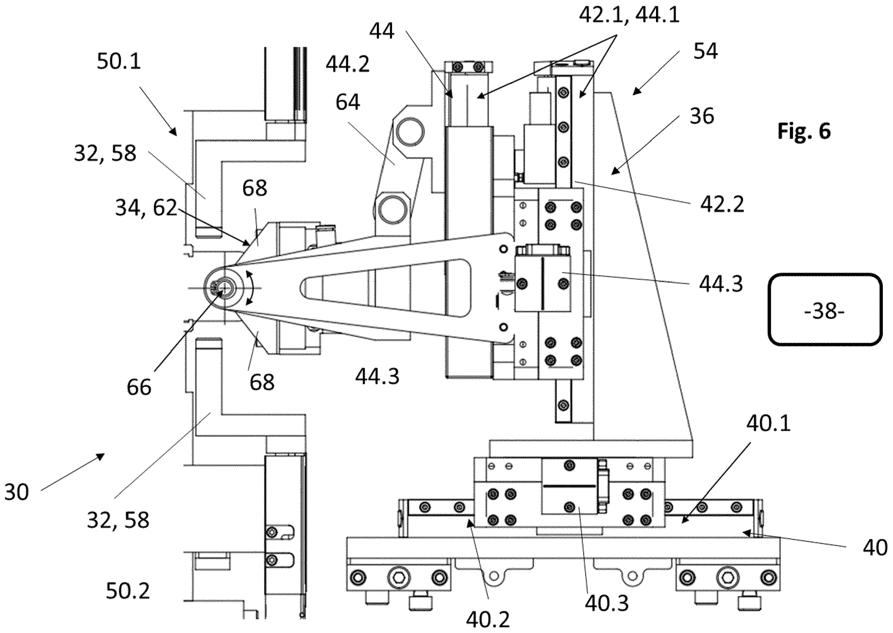

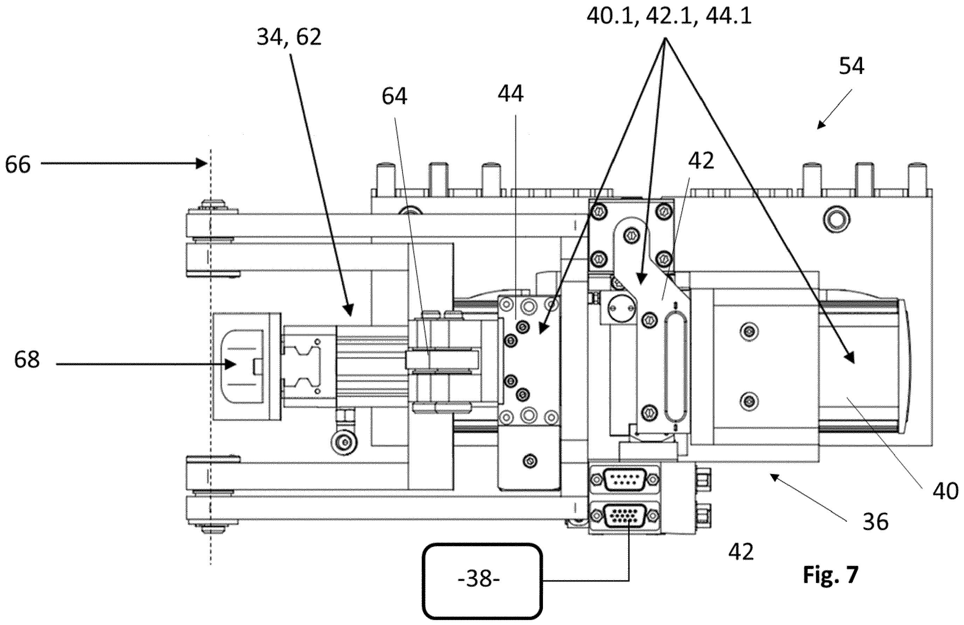

Gemäß den Fig. 6 und 7 weist die Relativbewegungseinrichtung 36 eine Längsbewegungseinheit 40 zum relativen, insbesondere linearen, Bewegen der ersten und der zweiten Halteeinrichtung 32, 34 mit wenigstens einer Richtungskomponente in Längsrichtung zu dem zu biegenden Ableitertab 12.1a. 12.4a, 12.1b-12.4b (insbesondere in X-Richtung), eine Querbewegungseinheit 42 zum relativen, insbesondere linearen, Bewegen der ersten und der zweiten Halteeinrichtung 32, 34 mit wenigstens einer Richtungskomponente quer zu dem zu biegenden Ableitertab 12.1a-12.4a, 12.1b, 12.4b (insbesondere in Y-Richtung) und eine Drehbewegungseinheit 44 zum relativen Verdrehen der ersten und der zweiten Halteeinrichtung 32, 34 auf.

Bei der dargestellten Ausführungsform weisen die jeweiligen Einheiten 40, 42, 44 der Relativbewegungseinrichtung 36 jeweils eine Linearachse 40.1, 42.1, 44.1 auf, die einen Linearbewegungsmechanismus 40.2, 42.2, 44.2 und einen durch die Steuerung 38 angesteuerten Servoantrieb 40.3, 42.3, 44.3 aufweist.

Gemäß Fig. 4 sind die Halteeinrichtungen 32, 34 und die Relativbewegungseinrichtung 36 auf einer linear beweglichen Basis 46 angeordnet, die zwischen einer in Fig. 4 dargestellten Warte- oder Wartungsposition und einer Biegeposition zum Durchführen des Biegens bewegbar ist.

Die Biegevorrichtung 30 ist beispielsweise eine in einer Produktionsanlage für Batteriemodule oder Batteriepacks vorgesehene Biegestation zum Vorbereiten der mit Ableitertabs versehenen Batteriezellen, wie insbesondere Pouch-Zellen, für das Einbinden in die Batteriemodule oder die Batteriepacks.

Gemäß Fig. 4 weist die insbesondere als Servobiegevorrichtung ausgebildete Biegevorrichtung 30 eine erste Klemmeinheit 50.1, eine zweite Klemmeinheit 50.2, eine Biegeeinheit 54 und einen Teleskopauszug 56 auf.

Mittels des Teleskopauszuges 56 ist die Basis 46 zwischen der Warte- oder Wartungsposition und der Biegeposition bewegbar.

Die erste Halteeinrichtung 32 ist bei der dargestellten Ausführungsform durch die erste und zweite Klemmeinheit 50.1, 50.2 gebildet, welche spiegelbildlich zueinander angeordnet und ähnlich aufgebaut sind. Der Aufbau der Klemmeinheiten 50.1, 50.2 wird im Folgenden am Beispiel der in Fig. 5 dargestellten ersten Klemmeinheit 50.1 beschrieben.

Die jeweilige Klemmeinheit 50.1, 50.2 weist jeweils einen Niederhalter 58 und einen Andrücker 60 auf. Durch aufeinander zu Bewegen der Klemmeinheiten 50.1, 50.2 wird der zu biegende Ableitertab 12.1a-12.4a, 12.1b-12.4b für den Umformprozess (an der Basis 24) eingespannt. Der Andrücker 60 ist relativ zu dem Niederhalter 58 beweglich. Gesteuert durch die Steuerung 38 bringt der Andrücker 60 den zu biegenden Ableitertab 12.1a-12.4a, 12.1b-12.4b in eine definierte Position, so dass die Biegeeinheit 54 diese greifen kann. Der Andrücker 60 bildet somit ein Positionierelement zum Positionieren des Ableitertabs.

Gemäß Fig. 6 und 7 weist die Biegeeinheit 54 die Relativbewegungseinrichtung 36 und die zweite Halteeinrichtung 34 auf. Bei der dargestellten Ausführungsform weist die Biegeeinheit die erste bis dritte Linearachse 40.1, 42.1, 44.1 und einen Greifer, beispielsweise ausgebildet als Parallelgreifer 62, als zweite Halteeinrichtung 34 auf.

Der Parallelgreifer 62 ist mit den Linearachsen 40.1, 42.1, 44.1 verbunden und führt so die Biegebewegung aus. Die erste und zweite Linearachse 40.1, 42.1 führen zu einer linearen Bewegung des Parallelgreifers 62 in einer Ebene (z.B. X-Y-Ebene).

Somit lassen sich die Biegungen der Fig. 3b und 3c gemäß den Dimensionen D1 und D2 durchführen.

Die dritte Linearachse 44.1 überträgt ihre Bewegung über eine Koppelstange 64 auf den Parallelgreifer 62 und ermöglicht somit eine rotatorische Bewegung des Parallelgreifers 62 um eine Drehachse 66 senkrecht zu der Bewegungsebene der ersten und zweiten Linearachse 40.1, 42.1. Die Drehachse 66 der rotatorischen Bewegung ist durch die Lagerung des Parallelgreifers so definiert, dass sie sich an der Vorderkante von Greiferbacken 68 des Parallelgreifers 62 befindet.

Somit lässt sich die Biegung zwischen den Schenkeln 22.1, 22.2 um den Winkel w2 durchführen.

Der automatisch durch die Steuerung 38 gesteuerte Ablauf des Biegeverfahrens gestaltet sich wie folgt:
Für den Biegevorgang wird zunächst eine Batteriezelle - hier eine Pouch-Zelle 14.1-14.4 - seitlich in die Biegevorrichtung 30 eingefahren. Anschließend wird die Zelle 14.1-14.4 mit dem Niederhalter 58 gespannt, und der Andrücker 60 bringt den Ableitertab 12.1a-12.4a, 12.1b, 12.4b in Position. Die Biegeeinheit 54 fährt nun auf den Ableitertab 12.1a-12.4a, 12.1b, 12.4b zu, sodass dieser zwischen die Greiferbacken 68 des Parallelgreifers 62 einfädelt.

Daraufhin fahren die Andrücker 60 zurück und die Biegeeinheit 54 fährt auf die Spannposition vor. Der Parallelgreifer 62 spannt den Ableitertab 12.1a-12.4a, 12.1b, 12.4b, und mit den Linearachsen 40.1, 42.1, 44.1 wird die Biegeform erzeugt.

Nach der Umformung öffnen Parallelgreifer 62 und Niederhalter 58, um ein Weitertakten der Pouch-Zelle 14.1-14.4 zu ermöglichen.

Nach dem Biegen der Ableitertabs 12.1a-12.4a, 12.1b-12.4b werden die Batteriezellen - hier Pouch-Zellen 14.1-14.4 - in ein Batteriemodul oder einen Batteriepack eingefügt, und die Ableitertabs 12.1a-12.4a sowie 12.1b-12.4b werden in der entsprechend gewünschten Verschaltung miteinander kontaktiert, wie z.B. miteinander verschweißt.

Die Steuerung 38 ist eine elektronische Steuerung, die in Software und/oder Hardware ausgebildet sein kann. Insbesondere weist die Steuerung 38 einen Prozessor und einen Speicher mit einem darin gespeicherten Computerprogramm, das die Anweisungen zum Durchführen des Verfahrens enthält, auf.

Bei einigen Ausführungsformen ist die Steuerung 38 dazu ausgebildet, die Kräfte an der Relativbewegungseinrichtung 36 beim Durchführen des Biegens der unterschiedlichen Ableitertabs 12.1a-12.4a, 12.1b-12.4b zu regeln, steuern und zu überwachen, um Beschädigungen des Ableitertabs12.1a-12.4a, 12.1b-12.4b beim Biegen zu vermeiden und/oder fehlerhaft gebogene Ableitertabs zu erkennen.

Bei einigen Ausführungsformen ist die Steuerung 38 ausgebildet zum Ansteuern der Relativbewegungseinrichtung 36 derart, dass eine Rückverformung des Ableitertabs aufgrund eines elastischen Materialverhaltens kompensiert wird. Beispielsweise erfolgt eine Bewegung leicht über die eigentlichen Dimensionen D1, D2, w2 hinaus, um die Rückverformung zu kompensieren.

Die Biegevorrichtung 30 ist zum Biegen von Ableitertabs 12.1a-12.4a, 12.1b-12.4b mit unterschiedlichen Dicken und/oder Materialien ohne Werkzeugwechsel ausgebildet. Hierzu erfolgt lediglich eine entsprechende Programmierung oder Einstellung der Steuerung 38.

Aufgrund des Teleskopauszuges 56 ist die gesamte Biegevorrichtung 30 zum Anpassen an die jeweilige Position der zu verarbeitenden Pouch-Zelle 14.1-14.4 und/oder zum Verfahren der Biegevorrichtung 30 in eine Ruhe- und/oder Wartungsposition bewegbar.

Um flexibel und mit einfacheren Mitteln ein optimales Biegen von Ableitertabs von Batteriezellen wie z.B. Pouch-Zellen (14.1-14.4), die an unterschiedlichen Positionen zu einem Batteriemodul oder einem Batteriepack zusammengefügt werden sollen, zu ermöglichen, schafft die Erfindung ein Biegeverfahren zum Biegen der Ableitertabs (12.1a-12.4a; 12.1b-12.4b), umfassend:
a) Bereitstellen einer ersten Batteriezelle (z.B. erste Pouch-Zelle 14.1) mit einem ersten Ableitertab (12.1a; 12.1b) und einer zweiten Batteriezelle /z.B. zweite Pouch-Zelle 14.2) mit einem zweiten Ableitertab (12.2a; 12.2b), und
b) unterschiedliches Umbiegen des ersten Ableitertabs (12.1a; 12.1b) und des zweiten Ableitertabs (12.2a; 23.2b);
wobei Schritt b) die Schritte umfasst:
b1) Bereitstellen einer ersten und zweiten Halteeinrichtung (32, 34) zum Halten eines ersten bzw. zweiten Endbereichs (22.3, 22.2) des zu biegenden Ableitertabs (12.1a, 12.2a; 12.1b, 12.2b), wobei die Halteeinrichtungen mittels einer computergesteuerten Relativbewegungseinrichtung (36) relativ bewegbar sind,
b2) Halten des ersten Ableitertabs (12.1a; 12.1b) mit den Halteeinrichtungen (32, 34) und Ansteuern der Relativbewegungseinrichtung (36), um den ersten Ableitertab (12.1a; 12.1b) in eine erste gebogene Form zu biegen; und
b3) Halten des zweiten Ableitertabs (12.2a; 12.2b) mit den Halteeinrichtungen (32, 34) und Ansteuern der Relativbewegungseinrichtung (36) unterschiedlich zu Schritt b2), um den zweiten Ableitertab (12.2a; 12.2b) in eine zu der ersten gebogenen Form unterschiedliche zweite gebogene Form zu biegen.

### Bezugszeichenliste:

- 12.1a: erster Ableitertab (Pluspol)
- 12.1b: erster Ableitertab (Minuspol)
- 12.2a: zweiter Ableitertab (Pluspol)
- 12.2b: zweiter Ableitertab (Minuspol)
- 12.3a: dritter Ableitertab (Pluspol)
- 12.3b: dritter Ableitertab (Minuspol)
- 12.4a: vierter Ableitertab (Pluspol)
- 12.4b: vierter Ableitertab (Minuspol)
- 14.1: erste Pouch-Zelle (Beispiel für erste Batteriezelle)
- 14.2: zweite Pouch-Zelle (Beispiel für zweite Batteriezelle)
- 14.3: dritte Pouch-Zelle (Beispiel für dritte Batteriezelle)
- 14.4: vierte Pouch-Zelle (Beispiel für vierte Batteriezelle)
- 16: Elektrodenanordnung
- 18: Folienumhüllung
- 20: erster Schenkel
- 22: zweiter Schenkel
- 24: Basis (Ableitertab)
- 30: Biegevorrichtung
- 32: erste Halteeinrichtung
- 34: zweite Halteeinrichtung
- 36: Relativbewegungseinrichtung
- 38: Steuerung
- 40: Längsbewegungseinheit
- 40.1: erste Linearachse (Linearachse der Längsbewegungseinheit, X-Achse)
- 40.2: erster Linearbewegungsmechanismus (Längsbewegungseinheit)
- 40.3: erster Servoantrieb (Längsbewegungseinheit)
- 42: Querbewegungseinheit
- 42.1: zweite Linearachse (Linearachse der Querbewegungseinheit, Y-Achse)
- 42.2: zweiter Linearbewegungsmechanismus (Querbewegungseinheit)
- 42.3: zweiter Servoantrieb (Querbewegungseinheit)
- 44: Drehbewegungseinheit
- 44.1: dritte Linearachse (Linearachse der Drehbewegungseinheit)
- 44.2: dritter Linearbewegungsmechanismus (Längsbewegungseinheit)
- 44.3: dritter Servoantrieb (Längsbewegungseinheit)
- 46: Basis (Biegevorrichtung)
- 50.1: erste Klemmeinheit
- 50.2: zweite Klemmeinheit
- 54: Biegeeinheit
- 56: Teleskopauszug
- 58: Niederhalter
- 60: Andrücker
- 62: Parallelgreifer
- 64: Koppelstange
- 66: Drehachse
- 68: Greiferbacken
- D1: Abstand der Biegekanten in Längsrichtung des Ableitertabs (X-Richtung)
- D2: Abstand der Biegekanten in Querrichtung (Y-Richtung)
- L1: Länge des ersten Schenkels
- L2: Länge des zweiten Schenkels
- w1: Winkel zwischen Basis und erstem Schenkel
- w2: Winkel zwischen Schenkeln

## Patentansprüche

1. Im Zuge der Herstellung eines Batteriemoduls oder eines Batteriepacks aus Batteriezellen (14.1-14.4) durchzuführendes Biegeverfahren zum Biegen von Ableitertabs (12.1a-12.4a; 12.1b-12.4b) von Batteriezellen (14.1-14.4), umfassend:
a) Bereitstellen einer ersten Batteriezelle (14.1) mit einem ersten Ableitertab (12.1a; 12.1b) und einer zweiten Batteriezelle (14.2) mit einem zweiten Ableitertab (12.2a; 12.2b), und
b) Umbiegen des ersten Ableitertabs (12.1a; 12.1b) und des zweiten Ableitertabs (12.2a; 23.2b), so dass der erste und der zweite Ableitertab (12.1a, 12.2a; 12.1b, 12.2b) unterschiedlich gebogen sind;
wobei Schritt b) die Schritte umfasst:
b1) Bereitstellen einer Biegevorrichtung (30), die eine erste Halteeinrichtung (32) zum Halten eines ersten Endbereichs (22.3) des zu biegenden Ableitertabs (12.1a, 12.2a; 12.1b, 12.2b), eine zweite Halteeinrichtung (34) zum Halten eines zweiten Endbereichs (22.2) des zu biegenden Ableitertabs (12.1a, 12.2a; 12.1b, 12.2b) und eine computergesteuerte Relativbewegungseinrichtung (36) zum relativen Bewegen der ersten und der zweiten Halteeinrichtung (32, 34) in wenigstens zwei Bewegungsrichtungen aufweist,
b2) Halten des ersten Ableitertabs (12.1a; 12.1b) mit der ersten und der zweiten Halteeinrichtung (32, 34) und Ansteuern der Relativbewegungseinrichtung (36), um den ersten Ableitertab (12.1a; 12.1b) in eine erste gebogene Form zu biegen;
b3) Halten des zweiten Ableitertabs (12.2a; 12.2b) mit der ersten und der zweiten Halteeinrichtung (32, 34) und Ansteuern der Relativbewegungseinrichtung (36) unterschiedlich zu Schritt b2), um den zweiten Ableitertab (12.2a; 12.2b) in eine zu der ersten gebogenen Form unterschiedliche zweite gebogene Form zu biegen.

2. Biegeverfahren nach Anspruch 1, **dadurch gekennzeichnet,**
**dass** Schritt b1) umfasst: Bereitstellen der Relativbewegungseinrichtung (36) mit wenigstens einer oder mehreren der folgenden Einheiten:
2.1 einer Längsbewegungseinheit (40) zum relativen vorzugsweise linearen Bewegen der ersten und der zweiten Halteeinrichtung (32, 34) mit wenigstens einer Richtungskomponente in Längsrichtung zu dem zu verbiegenden Ableitertab (12.1a, 12.2a; 12.1b, 12.2b);
2.2 einer Querbewegungseinheit (42) zum relativen vorzugsweise linearen Bewegen der ersten und der zweiten Halteeinrichtung (32, 34) mit wenigstens einer Richtungskomponente quer zu dem zu verbiegenden Ableitertab (12.1a, 12.2a; 12.1b, 12.2b);
2.3 einer Drehbewegungseinheit (44) zum relativen Verdrehen der ersten und der zweiten Halteeinrichtung (32, 34).

3. Biegeverfahren nach einem der voranstehenden Ansprüche, **dadurch gekennzeichnet,**
**dass** Schritt b1) umfasst: Bereitstellen der ersten Halteeinrichtung (32) mit einer ersten Klemmeinheit (50.1), die einen ersten Niederhalter (58) aufweist, mit einer zweiten Klemmeinheit (50.2), die einen zweiten Niederhalter (58) aufweist, und mit wenigstens einem an wenigstens einer der Klemmeinheiten (50.1, 50.2) verfahrbar zu dieser angeordnetem Andrücker (60),
und **dass** der erste Endbereich (22.3) durch relatives aufeinander zu Bewegen des ersten und zweiten Niederhalters (58) gehalten wird und der Ableitertab (12.1a, 12.2a; 12.1b, 12.2b) durch den wenigstens einen Andrücker (60) in eine definierte Position gebracht wird.

4. Biegeverfahren nach einem der voranstehenden Ansprüche, **dadurch gekennzeichnet,**
**dass** Schritt b1) umfasst: Bereitstellen der zweiten Halteeinrichtung (34) mit einem Parallelgreifer (62), der mittels der Relativbewegungseinrichtung (36) zum Verbiegen des Ableitertabs (12.1a, 12.2a; 12.1b, 12.2b) bewegbar ist.

5. Biegeverfahren nach einem der voranstehenden Ansprüche, **dadurch gekennzeichnet,**
**dass** Schritt b) wenigstens einen oder mehrere der folgenden Schritte umfasst:
b.i) Regeln, Steuern und/oder Überwachen der Kräfte an der Relativbewegungseinrichtung (36) beim Durchführen von Schritt b2) und/oder b3), um Beschädigungen des Ableitertabs (12.1a, 12.2a; 12.1b, 12.2b) beim Biegen zu vermeiden und/oder fehlerhaft gebogene Ableitertabs zu erkennen;
b.ii) Ansteuern der Relativbewegungseinrichtung (36) derart, dass eine Rückverformung des Ableitertabs (12.1a, 12.2a; 12.1b, 12.2b) aufgrund eines elastischen Materialverhaltens kompensiert wird;
b.iii) Biegen von Ableitertabs (12.1a, 12.2a; 12.1b, 12.2b) mit unterschiedlichen Dicken und/oder Materialien mit der Biegevorrichtung (30) ohne Werkzeugwechsel;
b.iv) Bewegen der gesamten Biegevorrichtung (30) zum Anpassen an die jeweilige Position der zu verarbeitenden Batteriezelle (14.1-14.4) und/oder zum Verfahren der Biegevorrichtung (30) in eine Ruhe- und/oder Wartungsposition;
b.v) vorzugsweise seitliches Einfahren der ersten Batteriezelle (14.1) in die Biegevorrichtung (30), Spannen des ersten Endbereichs (22.3) des ersten Ableitertabs (12.1a; 12.1b) mit der ersten Halteeinrichtung (32), Positionieren des ersten Ableitertabs (12.1a; 12.1b) mittels eines Positionierelements (60), Spannen des zweiten Endbereichs (22.2) des ersten Ableitertabs (12.1a; 12.1b) mit der zweiten Halteeinrichtung (34), Biegen des ersten Ableitertabs (12.1a; 12.1b) durch Bewegen der zweiten Halteeinrichtung (34) gemäß einem ersten Bewegungsmuster, Öffnen der ersten und zweiten Halteeinrichtung (32, 34) und Weitertakten der ersten Batteriezelle (14.1);
b.vi) vorzugsweise seitliches Einfahren der zweiten Batteriezelle (14.2) in die Biegevorrichtung (30), Spannen des ersten Endbereichs (22.3) des zweiten Ableitertabs (12.2a; 12.2b) mit der ersten Halteeinrichtung (32), Positionieren des zweiten Ableitertabs (12.2a; 12.2b) mittels eines Positionierelements (60), Spannen des zweiten Endbereichs (22.2) des zweiten Ableitertabs (12.2a; 12.2b) mit der zweiten Halteeinrichtung (34), Biegen des zweiten Ableitertabs (12.2a; 12.2b) durch Bewegen der zweiten Halteeinrichtung (34) gemäß einem zweiten Bewegungsmuster, Öffnen der ersten und zweiten Halteeinrichtung (32, 34) und Weitertakten der zweiten Batteriezelle (14.2).

6. Herstellverfahren zum Herstellen eines Batteriemoduls oder Batteriepacks aus Batteriezellen, umfassend:
Durchführen des Biegeverfahrens nach einem der voranstehenden Ansprüche und
c) elektrisches Kontaktieren des ersten und des zweiten Ableitertabs (12.1a, 12.2a; 12.1b, 12.2b), um das Batteriemodul zu bilden.

7. Biegevorrichtung (30) zum Biegen von Ableitertabs (12.1a-12.4a; 12.1b-12.4b) von Batteriezellen (14.1-14.4) im Zuge der Herstellung eines Batteriemoduls oder Batteriepacks aus Batteriezellen, umfassend eine erste Halteeinrichtung (32) zum Halten eines ersten Endbereichs (22.3) des zu biegenden Ableitertabs (12.1a-12.4a; 12.1b-12.4b), eine zweite Halteeinrichtung (34) zum Halten eines zweiten Endbereichs (22.2) des zu biegenden Ableitertabs (12.1a-12.4a; 12.1b-12.4b) und eine computergesteuerte Relativbewegungseinrichtung (36) zum relativen Bewegen der ersten und der zweiten Halteeinrichtung (32, 34) in wenigstens zwei Bewegungsrichtungen sowie eine Steuerung (38), die dazu ausgebildet ist, die Relativbewegungseinrichtung (36) gemäß einem ersten Bewegungsmuster zum Verbiegen eines ersten Ableitertabs (12.1a; 12.1b) in eine erste gebogene Form und gemäß einem zweiten Bewegungsmuster zum Verbiegen eines zweiten Ableitertabs (12.2a; 12.2b) in eine zweite gebogene Form anzusteuern.

8. Biegevorrichtung (30) nach Anspruch 7, **dadurch gekennzeichnet,**
**dass** die Steuerung (38) dazu eingerichtet ist, die Biegevorrichtung (30) zum Durchführen des Biegeverfahrens nach einem der Ansprüche 1 bis 5 anzusteuern.

9. Biegevorrichtung (30) nach einem der Ansprüche 7 oder 8, **dadurch gekennzeichnet,**
**dass** die Relativbewegungseinrichtung (36) wenigstens eine oder mehrere der folgenden Einheiten aufweist:
9.1 eine Längsbewegungseinheit (40) zum relativen, vorzugsweise linearen, Bewegen der ersten und der zweiten Halteeinrichtung (32, 34) mit wenigstens einer Richtungskomponente in Längsrichtung zu dem zu biegenden Ableitertab ((12.1a-12.4a; 12.1b-12.4b);
9.2 eine Querbewegungseinheit (42) zum relativen, vorzugsweise linearen, Bewegen der ersten und der zweiten Halteeinrichtung (32, 34) mit wenigstens einer Richtungskomponente quer zu dem zu biegenden Ableitertab (12.1a-12.4a; 12.1b-12.4b); und/oder
9.3 eine Drehbewegungseinheit (44) zum relativen Verdrehen der ersten und der zweiten Halteeinrichtung (32, 34).

10. Biegevorrichtung (30) nach Anspruch 9, **dadurch gekennzeichnet,**
**dass** die jeweiligen Einheiten (40, 42, 44) der Relativbewegungseinrichtung (36) jeweils eine Linearachse (40,1, 42.1, 44.1) aufweisen, die einen Linearbewegungsmechanismus (40.2, 42.2, 44,2) und einen Servoantrieb (40.3, 42.3, 44.3) aufweist.

11. Biegevorrichtung (30) nach einem der Ansprüche 7 bis 10, **dadurch gekennzeichnet,**
**dass** die Halteeinrichtungen (32, 34) und die Relativbewegungseinrichtung (36) auf einer linear beweglichen Basis (46) angeordnet sind, die zwischen einer Warte- oder Wartungsposition und einer Biegeposition zum Durchführen des Biegens bewegbar ist.

12. Biegevorrichtung (30) nach einem der Ansprüche 7 bis 11, **dadurch gekennzeichnet, dass**
12.1 die erste Halteeinrichtung (32) eine erste Klemmeinheit (50.1) mit einem ersten Niederhalter (58), eine zweite Klemmeinheit (50.2) mit einem zweiten Niederhalter (58) und wenigstens einen an wenigstens einer der Klemmeinheiten (50.1, 50.2) verfahrbar zu dieser angeordnetem Andrücker (60) aufweist und/oder
12.2 eine Biegeeinheit (54) vorgesehen ist, die einen mittels der Relativbewegungseinrichtung (36) verfahrbaren Greifer (62) als zweite Halteeinrichtung (34) aufweist.

13. Verwendung einer Biegevorrichtung (30) nach einem der Ansprüche 7 bis 12 zum unterschiedlichen Biegen von Ableitertabs (12.1a-12.4a; 12.1b-12.4b) mehrerer Batteriezellen (14.1-14.4), um diese beim Herstellen eines Zell-Moduls oder Zell-Packs miteinander zu verbinden.

14. Steuerung (38) für eine Biegevorrichtung (30) nach einem der Ansprüche 7 bis 12, wobei die Steuerung (38) dazu eingerichtet ist, die Biegevorrichtung (30) zum Durchführen des Biegeverfahrens nach einem der Ansprüche 1 bis 5 derart anzusteuern, dass Ableitertabs (12.1a-12.4a; 12.1b-12.4b) von Batteriezellen (14.1-1.4), die zu einem Zell-Modul oder Zell-Pack zusammengesetzt werden sollen, unterschiedlich gebogen werden.

15. Computerprogramm, umfassend Anweisungen, die eine Biegevorrichtung (30) nach einem der Ansprüche 7 bis 12 dazu veranlassen, das Biegeverfahren nach einem der Ansprüche 1 bis 5 durchzuführen.
